(19) Europäisches Patentamt / European Patent Office / Office européen des brevets

(11) **EP 1 461 660 B1**

(12) **FASCICULE DE BREVET EUROPEEN**

(45) Date de publication et mention
de la délivrance du brevet:
**12.05.2010 Bulletin 2010/19**

(21) Numéro de dépôt: **02803826.3**

(22) Date de dépôt: **21.11.2002**

(51) Int Cl.:
***G02B 27/58*** (2006.01)   ***G01S 13/90*** (2006.01)

(86) Numéro de dépôt international:
**PCT/FR2002/003989**

(87) Numéro de publication internationale:
**WO 2003/046642 (05.06.2003 Gazette 2003/23)**

(54) **ENSEMBLE IMAGEUR A INSTRUMENT OPTIQUE A SYNTHESE D'OUVERTURES**

ABBILDUNGSBAUGRUPPE MIT EINEM OPTISCHEN INSTRUMENT MIT SYNTHETISCHER APERTUR

IMAGING ASSEMBLY WITH SYNTHETIC APERTURE OPTICAL INSTRUMENT

(84) Etats contractants désignés:
**AT BE BG CH CY CZ DE DK EE ES FI FR GB GR IE IT LI LU MC NL PT SE SK TR**

(30) Priorité: **27.11.2001  FR 0115303**

(43) Date de publication de la demande:
**29.09.2004  Bulletin 2004/40**

(73) Titulaire: **Thales**
**92200 Neuilly-sur-Seine (FR)**

(72) Inventeurs:
• **THOMAS, Eric**
  **F-06210 Mandelieu (FR)**
• **BLANC, Philippe**
  **F-06210 Mandelieu (FR)**

(74) Mandataire: **Esselin, Sophie et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A- 3 556 630     US-A- 4 136 954**

• **DERENIAK EUSTACE L: "APPLICATION OF A SYNTHETIC APERTURE OPTICAL SYSTEM TO INFRARED IMAGING" APPLIED OPTICS, vol. 12, no. 3, mars 1973 (1973-03), pages 487-492, XP002220216 NEW YORK US**

EP 1 461 660 B1

## Description

La présente invention est relative à un ensemble imageur à instrument optique à synthèse d'ouvertures.

Il est envisagé, notamment dans l'industrie spatiale, d'utiliser des systèmes optiques imageurs à synthèse d'ouvertures. Ces systèmes consistent en une combinaison de sous-systèmes ayant chacun une taille réduite de façon à obtenir pratiquement le même résultat qu'un système optique de grandes dimensions. Un système composé de sous-systèmes de petites dimensions est plus aisé à réaliser qu'un système optique de grande dimension et pose moins de problèmes de lancement à l'aide d'un satellite. A titre d'exemple, un système imageur de ce type a une fonction de télescope.

La combinaison des signaux obtenus par chacun des instruments s'effectue en général par interférométrie de Fizeau ou de Michelson.

Le document Applied Optics, Vol. 12, No. 3, pages 487-492 décrit un système à synthèse d'ouvertures destiné à être utilisé dans le domaine infrarouge.

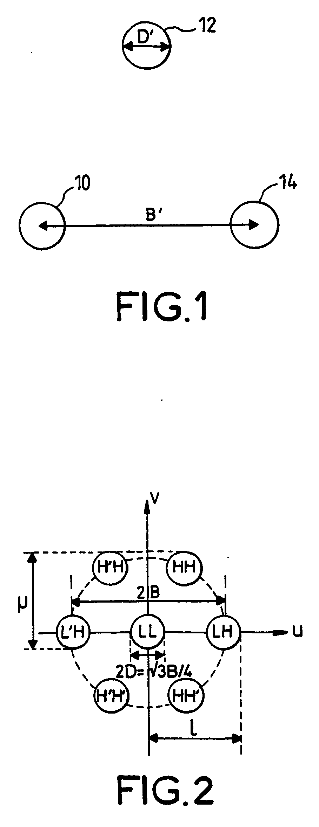

La figure 1 représente, à titre d'illustration, une configuration de pupilles d'un interféromètre à trois télescopes.

La caractéristique optique principale d'un appareil optique à synthèse d'ouvertures est déterminée par le diamètre des pupilles 10, 12, 14 et leurs positions respectives. Dans cet exemple, les pupilles ont toutes le même diamètre D' et leurs centres sont disposés selon un triangle équilatéral de base B'.

On sait que de tels appareils à synthèse d'ouvertures peuvent présenter une fonction de transfert de modulation (FTM) dont le support est de type discontinu lorsque la distance séparant les pupilles est suffisamment grande par rapport à leur diamètre, c'est-à-dire que cette fonction présente des plages d'annulation. La figure 2 représente la fonction de transfert de modulation de l'instrument représenté sur la figure 1.

La fonction de transfert de modulation d'un appareil optique est la réponse de cet instrument pour les diverses fréquences spatiales d'entrée. Dans le diagramme de la figure 2, les fréquences spatiales en colonne sont représentées sur l'axe u des abscisses et les fréquences en ligne sont représentées sur l'axe v des ordonnées. Le support de la fonction de transfert de modulation de l'instrument représenté sur la figure 1 présente ainsi sept zones circulaires, chacune ayant un diamètre 2D (avec $D=\dfrac{D'}{\lambda'}$, λ étant la longueur d'onde) :

une zone LL "centrale" pour les basses fréquences (L) en colonne et en ligne, et six zones circulaires périphériques : LH, HH, H'H, L'H, H'H' et HH'. La désignation LH signifie que la zone concerne des basses fréquences (L) en ligne et des hautes fréquences (H) en colonne. De même, les désignations HH, H'H', H'H, HH' signifient des hautes fréquences tant en ligne qu'en colonne.

Les centres des zones circulaires périphériques se trouvent sur un cercle de diamètre 2B ($B=\dfrac{B'}{\lambda}$) centré à l'origine.

La ligne joignant les centres des cercles HH et H'H' forme un angle de 60° avec l'axe des abscisses et, de même, la ligne joignant les centres des cercles H'H et HH' forme un angle de 120° avec cet axe des abscisses.

En pratique, les images sont échantillonnées avec une fréquence d'échantillonnage spatial qui peut être différente en ligne et en colonne. Pour éviter le repliement du spectre, c'est-à-dire une perte d'information, il faut respecter le théorème de Shannon, c'est-à-dire que la fréquence d'échantillonnage en colonne doit être supérieure ou égale à 2 fois la fréquence maximale du spectre à restituer soit 2 fois la distance 1 (figure 2) telle que 1 = B + D et, en ligne, la fréquence d'échantillonnage doit être égale à deux fois la distance μ (figure 2) qui vaut : $\mu = \sqrt{3}B/2 + D.$

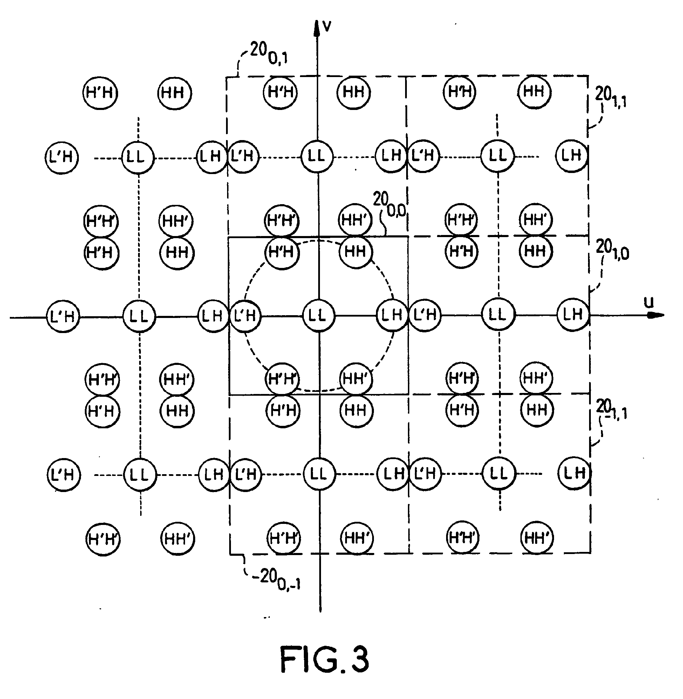

Ainsi, quand la fréquence d'échantillonnage en colonne est 2B + 2D et la fréquence d'échantillonnage en ligne est $\sqrt{3}B/2 + D$, on obtient une image dont le support du spectre est du type de celui représenté sur la figure 3 avec une section centrale de spectre comprenant les sept zones circulaires LL, L'H, LH, HH, H'H', H'H et HH' et délimitée sur la figure 3, par un rectangle $20_{0,0}$. Le spectre comporte aussi un ensemble de répliques identiques à la section centrale qui sont décalées sur l'axe des abscisses d'un nombre entier de fréquences d'échantillonnage en colonne, et sur l'axe des ordonnées, d'un nombre entier de fréquences d'échantillonnage en ligne.

Ainsi, comme on le voit sur la figure 3, le rectangle $20_{0,0}$ central de la partie utile du spectre est répliqué pour former un pavage avec des pavés identiques au pavé central $20_{0,0}$ constituant des répliques $20_{1,0}$, $20_{0,1}$, $20_{1,1}$, $20_{0,-1}$, $20_{-1,1}$, etc.

Jusqu'à présent, on a considéré que la fréquence d'échantillonnage ne pouvait pas descendre au-dessous des valeurs correspondant à celles de la figure 3 car, pour des fréquences d'échantillonnage inférieures, les zones de FTM des répliques chevauchent les zones FTM de la section centrale $20_{0,0}$, ce qui aboutirait à un repliement du spectre, c'est-à-dire à une détérioration de l'information.

Le nombre de pixels (éléments d'image) nécessaire à l'échantillonnage de l'image est, bien entendu, une fonction directe de la fréquence d'échantillonnage. Il en résulte que plus la fréquence d'échantillonnage est élevée et plus le nombre de pixels nécessaires est élevé.

L'invention permet une fréquence d'échantillonnage sensiblement plus faible, sans repliement de spectre. Autrement dit, l'invention permet, à champ constant, de diminuer le nombre de pixels nécessaires pour restituer des images et d'augmenter la qualité de l'image (rapport signal à bruit).

L'invention tire parti du fait que la zone centrale $20_{0,0}$ présente des parties importantes dans lesquelles la fonction de transfert de modulation est nulle.

Le procédé consiste :

- à conférer aux fréquences d'échantillonnage en colonne et en ligne des valeurs inférieures aux fréquences d'échantillonnage qui sont déterminées par le critère de Shannon, ces fréquences d'échantillonnage de valeurs inférieures fournissant des répliques occupant des parties à fonction de transfert nulle de la section centrale du spectre, sans former d'intersection avec les zones à fonction de transfert non nulle de cette section centrale, l'ensemble des zones utiles différentes les plus rapprochés de l'origine formant alors une nouvelle section centrale de dimension plus faible que la section centrale d'origine, et
- pour reconstruire l'image, à reconfigurer selon la section centrale d'origine la section centrale de faible dimension.

Ainsi, on choisit des fréquences d'échantillonnage en ligne et en colonne dont les valeurs sont telles que des répliques chevauchent cette section centrale, mais évitent des intersections entre les zones (circulaires) à fonction de transfert de modulation non nulle (c'est-à-dire que les zones à FTM non nulle des répliques remplissent des zones de valeur nulle de la section centrale de la FTM), et on sélectionne dans la section centrale ainsi remplie celles des zones qui sont les plus rapprochées de l'origine des fréquences et qui permettent de reconstruire la fréquence de transfert de modulation, et on reconfigure cette nouvelle section centrale, de dimension plus faible que la section centrale d'origine, de façon qu'elle corresponde, pour la reconstruction d'image, à la section centrale d'origine.

Dans le cas d'un instrument embarqué, la reconstruction de l'image s'effectue de préférence au sol.

On montre que dans le cas du système interférométrique à trois pupilles représenté sur la figure 1, le pas d'échantillonnage en ligne peut être augmenté d'un facteur d'environ 1,62 et le pas d'échantillonnage en colonne peut être augmenté d'un facteur d'environ 1,67. Ainsi, le nombre total de pixels nécessaires à l'échantillonnage de l'image est, à champ constant, diminué d'un facteur 2,7.

Ainsi, l'invention concerne de façon générale un ensemble imageur comprenant un instrument à synthèse d'ouvertures comportant les caractéristiques résumées dans la revendication 1.

Dans une réalisation, les valeurs des fréquences d'échantillonnage sont telles qu'au moins selon une direction, en ligne ou en colonne, les zones de la section centrale réduite de la fonction de transfert de modulation sont tangentes.

L'instrument peut comprendre trois pupilles de diamètre D' dont les centres sont disposés selon un triangle équilatéral de côté B', tels que : $2D'=\sqrt{3}B'/4$ , la fréquence d'échantillonnage en colonne étant égale à 3B/2 et la fréquence d'échantillonnage en ligne étant égale à 6D, avec $B=\dfrac{B'}{\lambda}$ et $D=\dfrac{D'}{\lambda'}$ , $\lambda$ étant une longueur d'onde.

L'instrument comprend, dans une variante, quatre pupilles dont chacune présente un diamètre D' et dont les centres sont disposés selon un carré de diagonale B' tels que : 2D' = B'/2, les fréquences d'échantillonnage en colonne et en ligne étant de 6D, avec $D=\dfrac{D'}{\lambda'}$ , $\lambda$ étant une longueur d'onde.

L'ensemble est par exemple du type interféromètre, notamment télescope.

Il est aussi décrit un procédé pour déterminer la fréquence d'échantillonnage optique d'un ensemble imageur comprenant un instrument du type à synthèse d'ouvertures de plusieurs pupilles, tel qu'un télescope interférométrique, qui est caractérisé en ce qu'on choisit cette fréquence d'échantillonnage à une valeur inférieure à celle imposée par le critère de Shannon et telle que les répliques voisines de la section centrale de la fonction de transfert de modulation chevauchent cette section centrale de façon que les zones à fonction de transfert non nulle de ces répliques s'intercalent dans des zones à fonction de transfert nulle de la section centrale, sans intersection avec une zone à fonction de transfert non nulle, et de façon telle qu'une section réduite à l'intérieur de la section centrale contienne l'ensemble des zones utiles pour reconstruire la fonction de transfert de modulation.

Dans une réalisation, on choisit la fréquence d'échantillonnage en ligne et en colonne de façon telle qu'au moins selon une direction, en ligne ou en colonne, les zones de la section réduite qui sont voisines sont tangentes.

L'invention concerne également un procédé de reconstruction d'images comprenant les caractéristiques résumées dans la revendication 6.

D'autres caractéristiques et avantages de l'invention apparaîtront avec la description de certains de ses modes de réalisation, celle-ci étant effectuée en se référant aux dessins ci-annexés sur lesquels :

la figure 1, déjà décrite, représente un interféromètre à trois pupilles,
la figure 2, déjà décrite, représente le support de la fonction de transfert de modulation avant échantillonnage de l'interféromètre représenté sur la figure 1,
la figure 3, également déjà décrite, représente, pour l'interféromètre représenté sur la figure 1, le support du spectre après échantillonnage correspondant au critère de Shannon,

la figure 4 représente, pour l'interféromètre représenté sur la figure 1, le support du spectre résultant d'une fréquence d'échantillonnage déterminée avec le procédé conforme à l'invention,

les figures 5a, 5b et 5c sont des schémas illustrant un traitement pour retrouver le spectre d'origine en vue de la reconstruction de l'image après utilisation du procédé représenté sur la figure 4, et

les figures 6, 7, 8, 9, 10a, 10b et 10c sont des figures analogues aux figures, respectivement 1, 2, 3, 4, 5a, 5b et 5c, pour un interféromètre à quatre pupilles représenté sur la figure 6.

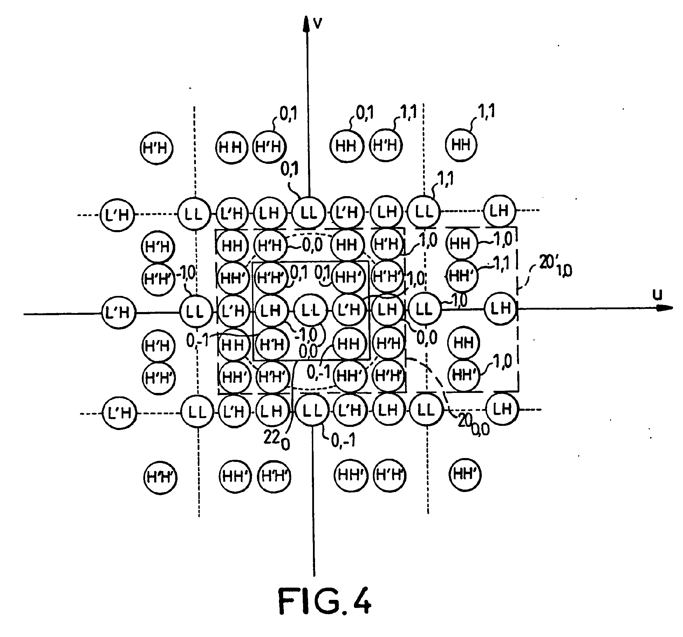

On se réfère tout d'abord à la figure 4.

Dans cet exemple correspondant à l'interféromètre à trois pupilles représenté sur la figure 1, on choisit une fréquence d'échantillonnage en colonne ayant pour valeur 3B/2 et une fréquence d'échantillonnage en ligne de valeur 6D.

Dans ce cas, comme on peut le voir sur la figure 4, la section (réplique) $20'_{1,0}$, pour laquelle le centre de la zone centrale LL a 1 pour abscisse et 0 pour ordonnée, chevauche la section centrale $20_{0,0}$. Ainsi, les zones H'H', L'H et H'H de cette réplique $20'_{1,0}$ se trouvent à l'intérieur de la section centrale $20_{0,0}$. En particulier, on observe que la zone $L'H_{1,0}$ se trouve entre les zones $LL_{0,0}$ et $LH_{0,0}$. Les indices pour les zones correspondent aux coordonnées du centre de la zone centrale LL de la réplique correspondante.

De même, la zone $LH_{-1,0}$ se trouve entre les zones $L'H_{0,0}$ et $LL_{0,0}$. On voit aussi que la zone $H'H'_{0,1}$ se trouve entre les zones $LH_{-1,0}$ et $H'H_{0,0}$ et est tangente à ces deux zones. De même, la zone $HH'_{0,1}$ se trouve entre les zones $HH_{0,0}$ et $L'H_{1,0}$ et est tangente à ces deux zones. De façon symétrique, la zone $H'H_{0,-1}$ se trouve entre les zones $LH_{-1,0}$ et $H'H'_{0,0}$ et est tangente à ces deux zones ; enfin, la zone $HH_{0,1}$ se trouve entre les zones $L'H_{1,0}$ et $HH'_{0,0}$ et est tangente à ces deux zones.

On voit ainsi que dans une section centrale $22_0$ de dimension plus réduite que la section centrale $20_{0,0}$ on retrouve les sept zones de fonction de transfert de modulation : LL, L'H, LH, HH', H'H, HH et H'H', la zone LL provenant de la section centrale 0,0 alors que les zones H'H' et HH' proviennent de la réplique 0,1, les zones H'H et HH proviennent de la réplique 0,-1, la zone L'H provient de la réplique 1,0 et la zone LH provient de la réplique -1,0.

Ainsi, bien qu'on ait choisi des fréquences d'échantillonnage en ligne et en colonne inférieures à celles correspondant au critère de Shannon, il ne se produit pas de repliement de spectre car on obtient dans une section centrale l'ensemble des sept zones de la fonction de transfert de modulation et ces zones ne se chevauchent pas.

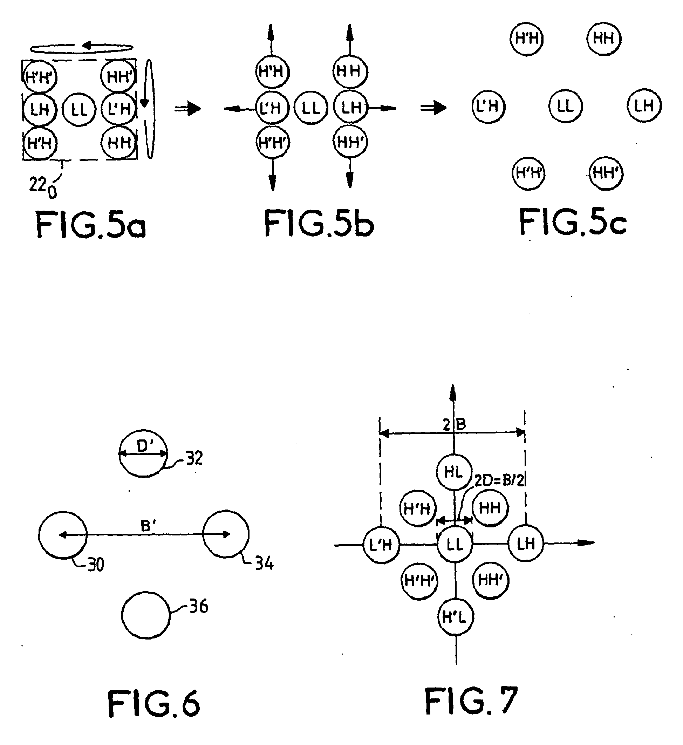

Ensuite, pour reconstruire l'image, on procède comme représenté sur les figures 5a, 5b et 5c, c'est-à-dire qu'après avoir obtenu la section centrale réduite $22_0$ (figures 4 et 5a), on procède à un réarrangement des zones LL, LH, L'H, HH, H'H, HH' et H'H' de façon que ces zones soient disposées comme représenté dans la section $20_0$ de la figure 3, c'est-à-dire comme sur la figure 5c. A cet effet, on permute HH et HH', on permute H'H' et H'H, et on permute LH et L'H. On obtient ainsi la position présentée sur la figure 5b. Ensuite, il suffit d'éloigner de la zone centrale LL les six zones périphériques H'H, HH, L'H, LH, HH' et H'H' pour obtenir la configuration représentée sur la figure 5c, c'est-à-dire la configuration de départ de la section centrale du spectre.

On a observé qu'avec ce procédé, bien que les parties à fonction de transfert nulle contiennent de l'énergie provenant du bruit présent à toutes les fréquences lors de l'échantillonnage, le signal obtenu est de même qualité, c'est-à-dire sans perte d'information, et sensiblement de même amplitude que dans le cas où l'on effectue l'échantillonnage correspondant au critère de Shannon.

Lorsque $2D' = \sqrt{3}B'/4$, le rapport entre la fréquence d'échantillonnage en colonne quand on respecte le critère de Shannon (figure 3) et la fréquence d'échantillonnage déterminée avec le procédé de l'invention (figure 4) a pour valeur $(8+\sqrt{3})/6 \approx 1,62$. Ainsi, on peut augmenter le pas entre les pixels dans ce rapport.

La relation indiquée ci-dessus entre D' et B' constitue la valeur maximale de D' qui permet d'utiliser le procédé conforme à l'invention. En effet, pour des valeurs de D' plus importantes, il n'est alors plus possible d'intercaler des répliques dans la zone centrale.

Ce même rapport est, en ligne, de 5/3 (toujours, dans l'hypothèse où : $2D' = \sqrt{3}B'/4$, ). Ainsi le pas entre les pixels en ligne peut être augmenté d'un facteur d'environ 1,67.

Le nombre total de pixels peut donc être réduit d'un facteur 1,62 x 1,67 = 2,7 pour un champ constant.

Étant donné qu'avec cet échantillonnage, pour un champ donné, on diminue le nombre de pixels, on peut donc augmenter la taille des pixels. Dans le cas d'un système d'observation de type "push-broom", pour lequel on utilise une seule ligne de détecteurs, le temps d'intégration peut être augmenté. Dans ces conditions dans le cas d'un système de type push-broom, le flux collecté par pixel est multiplié par : $1,62 \times 1,67^2$ ($1,67^2$ provient du fait que l'intégration est effectuée le long des colonnes). Ainsi, le flux collecté par pixel est multiplié par un facteur d'environ 4,52 par rapport à un échantillonnage respectant le critère de Shannon. Dans le cas le plus favorable (qui intervient quand les bruits sont indépendants de la surface du détecteur), le gain sur le rapport signal à bruit est de 4,52, et dans le cas défavorable (qui intervient quand le bruit dépend de la surface du détecteur), le gain sur le rapport signal à bruit est de $\sqrt{4,52}$ soit 2,13.

On va maintenant décrire en relation avec les figures 6, 7, 8, 9 et 10a, 10b, 10c un exemple d'application de l'invention dans le cas où l'interféromètre comporte quatre pupilles.

Un tel interféromètre est représenté sur la figure 6. Il comprend quatre pupilles 30, 32, 34 et 36 circulaires de diamètre D' dont les centres sont disposés selon un carré de diagonale B'. Dans cet exemple, B'=4D', qui est la valeur minimale de D' permettant de faire appel au procédé conforme à l'invention.

Le support de la fonction de transfert de modulation d'un tel interféromètre est représentée sur la figure 7. Cette fonction de transfert de modulation comporte neuf zones circulaires ayant toute un diamètre 2D

( $D=\dfrac{D'}{\lambda}$ ), soit B/2 ( $B=\dfrac{B'}{\lambda}$ ). En plus de la zone centrale LL, dont le centre est à l'origine des fréquences en colonne et en ligne, cette FTM comporte deux zones dont les centres sont sur l'axe des abscisses, à savoir les zones LH et L'H. Le centre de la zone LH a l'abscisse B et celui de la zone L'H a l'abscisse -B. En outre, deux zones HL et H'L présentent leurs centres sur l'axe des ordonnées. L'ordonnée du centre de la zone HL est +B, tandis que l'ordonnée de la zone H'L est -B.

Les centres des zones HL, LH, H'L et L'H forment ainsi un carré et au centre de chaque côté de ce carré se trouvent les centres des quatre autres zones circulaires, à savoir : HH, HH', H'H' et H'H. Comme dans le diagramme de la figure 2, LH signifie une basse fréquence en ligne et une haute fréquence en colonne, et HL une haute fréquence en ligne et une basse fréquence en colonne.

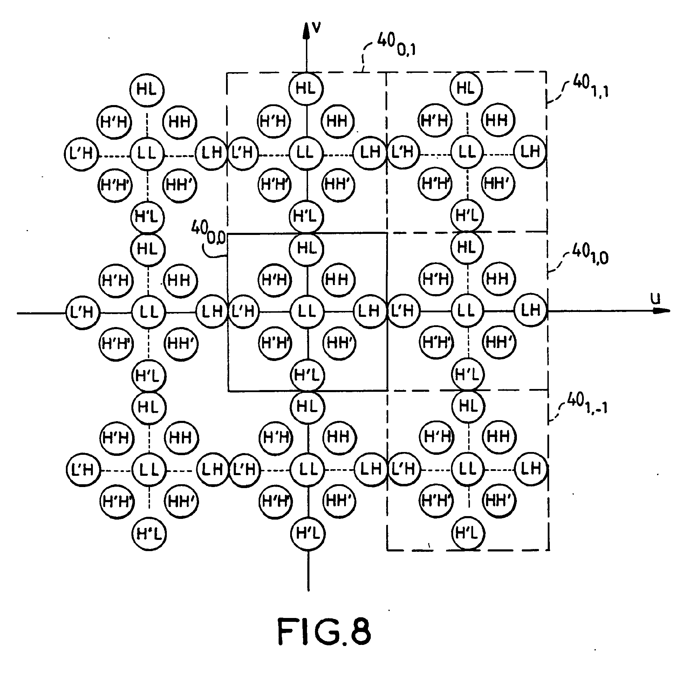

Lorsque la fréquence d'échantillonnage correspond au critère de Shannon avec une valeur minimale 2B + 2D tant en colonne qu'en ligne, on obtient pour la FTM (figure 8) une section centrale carrée $40_{0,0}$ et des répliques de cette section carrée, à savoir $40_{1,0}$, $40_{1,-1}$, $40_{1,1}$, $40_{0,1}$, etc., les indices ayant la même signification que dans le cas du diagramme de la figure 3.

Dans ce cas, quand on applique le procédé conforme à l'invention, on peut choisir la même fréquence d'échantillonnage en colonne et en ligne et on peut choisir cette fréquence d'échantillonnage avec une valeur telle que, dans la section centrale réduite, toutes les zones circulaires sont tangentes.

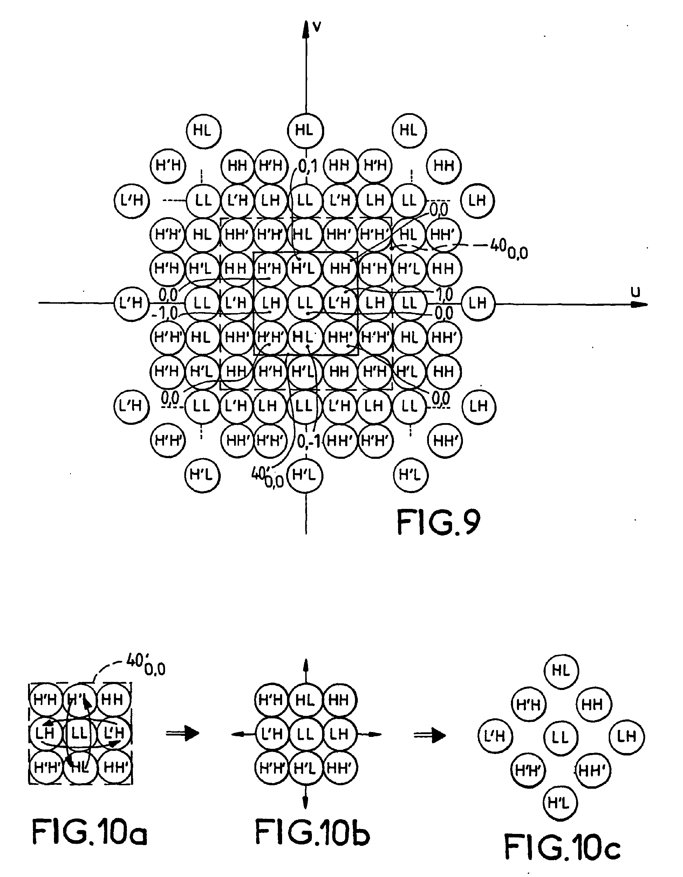

Dans l'exemple représenté sur la figure 9, cette fréquence d'échantillonnage en colonne et en ligne est de 6D. Ainsi, on obtient une section centrale réduite $40'_{0,0}$ comportant une zone centrale $LL_{0,0}$ et huit autres zones circulaires périphériques HH, H'H, H'L, LH, L'H, H'H', HL et HH' provenant de la section centrale et de répliques. Comme dans le diagramme de la figure 4, sur le diagramme de la figure 9, on a affecté à chaque zone circulaire les indices correspondant aux coordonnées du centre de la zone LL de la réplique correspondante.

La section centrale réduite $40'_{0,0}$ comporte, outre la zone $LL_{0,0}$, les zones $H'H_{0,0}$, $HH_{0,0}$, $H'H'_{0,0}$ et $HH'_{0,0}$. En outre, la zone $HL_{0,-1}$ s'intercale entre les zones $H'H'_{0,0}$ et $HH'_{0,0}$ et est tangente à ces zones. Cette zone est également tangente à la zone centrale $LL_{0,0}$. La zone $L'H_{1,0}$ s'intercale entre les zones $HH_{0,0}$ et $HH'_{0,0}$ et leur est tangente ainsi qu'à la zone $LL_{0,0}$. De même, la zone $H'L_{0,1}$ s'intercale entre les zones $H'H_{0,0}$ et $HH_{0,0}$ et leur est tangente ainsi qu'à la zone centrale $LL_{0,0}$. Enfin, la zone $LH_{-1,0}$ est intercalée entre les zones $H'H_{0,0}$ et $H'H'_{0,0}$ et leur est tangente ainsi qu'à la zone centrale $LL_{0,0}$.

Pour la reconstruction de l'image, il est nécessaire de reconfigurer la section centrale réduite $40'_{0,0}$ de façon telle que les neuf zones soient réparties comme les zones de la section centrale $40_{0,0}$ représentée sur la figure 8. A cet effet, partant de la section $40'_{0,0}$, on effectue des permutations pour que la zone HL se trouve du côté des ordonnées positives et la zone H'L du côté des ordonnées négatives, et de même on permute les zones LH et L'H. On obtient ainsi la configuration de la figure 10b. Il suffit ensuite de positionner les zones HL, LH, L'H et H'L pour obtenir la configuration représentée sur la figure 10c correspondant à la section centrale $40_{0,0}$ de la figure 8.

La valeur (6D) de la fréquence d'échantillonnage est égale aux cinq tiers de la valeur de la fréquence d'échantillonnage correspondant au critère de Shannon. Ainsi, le pas entre pixels peut être augmenté d'un facteur d'environ 1,67 et le nombre total de pixels nécessaires à l'échantillonnage peut, à champ constant, être réduit de $1,67^2 = 2,79$. Etant donné que la taille des pixels peut être augmentée et que, de même, le temps d'intégration peut aussi être augmenté dans le cas d'un système push-broom, le flux collecté par pixel est multiplié par un facteur : $1,67^2 \times 1,67 = 4,66$. Le gain sur le rapport signal sur bruit est compris entre 4,66 et 2,16.

L'invention n'est, bien entendu, pas limitée à un nombre de pupilles égal à trois ou quatre. Elle s'applique quel que soit le nombre de pupilles de l'interféromètre ou de façon plus générale, de l'instrument à synthèse d'ouvertures. Cependant, quel que soit le mode de réalisation, le rapport entre le diamètre de chaque pupille et la distance entre ces pupilles doit présenter une valeur maximale qui peut être déterminée aisément afin que les zones à fonction de transfert nulle soient suffisamment étendues pour permettre d'intercaler des supports de fonction de transfert de réplique non nulle dans la section centrale de cette FTM.

**Revendications**

**1.** Ensemble imageur comprenant un instrument à synthèse d'ouvertures comportant une pluralité de pupilles séparées (10, 12, 14 ; 30, 32, 34, 36) avec des moyens de détection par échantillonnage, dans lequel les valeurs des fréquences d'échantillonnage en colonne et en ligne sont inférieures aux valeurs correspondant au critère de Shannon, et sont telles que des zones de fonction de transfert de modulation de répliques résultant de l'échantillonnage s'insèrent dans des zones à fonction de transfert de modulation nulle de la section centrale de la fonction de transfert de modulation, de façon telle que ces zones ne forment pas d'intersection et que, dans une section centrale de dimension plus réduite que la section centrale de la fonction de transfert de modulation, soit présent l'ensemble des zones représentant la section centrale de la fonction de transfert de modulation, l'ensemble imageur comportant en outre des moyens pour reconfigurer le spectre de l'image acquise afin de la reconstruire, **caractérisé en ce que** :

lesdits moyens permettent de positionner les zones de la section centrale de dimension réduite ($40'_{0,0}$ ; $22_0$) de façon qu'elles correspondent aux positions des zones de la section centrale de la fonction de transfert de modulation d'origine afin de rétablir la fonction de transfert de modulation à partir des zones se trouvant dans la section réduite.

2. Ensemble selon la revendication 1 **caractérisé en ce que** les valeurs des fréquences d'échantillonnage sont telles qu'au moins selon une direction, en ligne ou en colonne, les zones de la section centrale réduite de la fonction de transfert de modulation sont tangentes.

3. Ensemble selon la revendication 1 ou 2 comprenant trois pupilles (10, 12, 14) de diamètre D' dont les centres sont disposés selon un triangle équilatéral de côté B', tels que : $2D' = \sqrt{3}B'/4$, la fréquence d'échantillonnage en colonne étant égale à 3B/2 et la fréquence d'échantillonnage en ligne étant égale à 6D, avec $B = \dfrac{B'}{\lambda}$ et $D = \dfrac{D'}{\lambda'}$, λ étant une longueur d'onde.

4. Ensemble selon la revendication 2 comprenant quatre pupilles (30, 32, 34, 36) dont chacune présente un diamètre D' et dont les centres sont disposés selon un carré de diagonale B' tels que : 2D' = B'/2, les fréquences d'échantillonnage en colonne et en ligne étant de 6D, avec $D = \dfrac{D'}{\lambda'}$, λ étant une longueur d'onde

5. Ensemble selon l'une quelconque des revendications précédentes **caractérisé en ce qu'**il est du type interféromètre, notamment télescope.

6. Procédé de reconstruction d'images dans un ensemble imageur comprenant un instrument du type à synthèse d'ouvertures de plusieurs pupilles séparées (10,12,14 ;30,32,34,36) avec des moyens de détection par échantillonnage, dans lequel on choisit la fréquence d'échantillonnage à une valeur inférieure à celle imposée par le critère de Shannon et telle que les répliques voisines de la section centrale de la fonction de transfert de modulation chevauchent cette section centrale de.façon que les zones à fonction de transfert non nulle de ces répliques s'intercalent dans des zones à fonction de transfert nulle de la section centrale de la fonction de transfert de modulation, sans intersection avec une zone à fonction de transfert non nulle; et de façon telle que dans une section centrale de dimension plus réduite que la section centrale de la fonction de transfert de modulation, et située à l'intérieur de la section centrale de la fonction de transfert de modulation, soit présent l'ensemble des zones utiles pour reconstruire la fonction de transfert de modulation, **caractérisé en ce que** l'on positionne les zones de la section centrale de dimension réduite ($40'_{0,0}$ ; $22_0$) de façon qu'elles correspondent aux positions des zones de la section centrale de la fonction de transfert de modulation d'origine afin de rétablir la fonction de transfert de modulation à partir des zones se trouvant dans la section centrale de dimension réduite.

7. Procédé selon la revendication 6, **caractérisé en ce qu'**on choisit la fréquence d'échantillonnage en ligne et en colonne de façon telle qu' au moins selon une direction, en ligne ou en colonne, les zones de la section réduite qui sont voisines sont tangentes.

**Claims**

1. An imaging assembly comprising an aperture synthesis instrument including a plurality of separate pupils (10, 12, 14; 30, 32, 34, 36) with means of detection by scanning, wherein the values of the vertical and horizontal scanning frequencies are lower than the values corresponding to the Shannon criterion and are such that the modulation transfer function zones of replicas resulting from the scanning are introduced into the zero modulation transfer function zones of the central section of the modulation transfer function, so that these zones do not form an intersection and that, in a central section smaller than the central section of the modulation transfer function, all of the zones are present which represent the central section of the modulation transfer function, the imaging assembly further comprising means for reconfiguring the spectrum of the acquired image so that it can be reconstructed, **characterised in that**:

said means allow the zones of the smaller central section ($40'_{0.0}$; $22_0$) to be positioned to correspond with the positions of the zones of the central section of the source modulation transfer function in order to re-establish the modulation transfer function from the zones located in the smaller section.

2. The assembly according to claim 1, **characterised in that** the values of the scanning frequencies are such that in at least one direction, horizontal or vertical, the zones of the smaller central section of the modulation transfer function are tangential.

3. The assembly according to claim 1 or 2, comprising three pupils (10, 12, 14) of diameter D', the centres of which are disposed in an equilateral triangle having the side B', so that: $2D' = \sqrt{3}B'/4$, the vertical scanning frequency being equal to 3B/2 and the horizontal scanning frequency being equal to 6D, where

$$B = \frac{B'}{\lambda} \text{ and } D = \frac{D'}{\lambda'}, \quad \lambda \text{ being a wavelength.}$$

4. The assembly according to claim 2, comprising four pupils (30, 32, 34, 36) each having a diameter D', the centres of which are disposed in the form of a square with a diagonal B', so that: '2D' = B'/2, the vertical and horizontal scanning frequencies being equal to 6D, where $D = \frac{D'}{\lambda'}, \quad \lambda$ being a wavelength.

5. The assembly according to any one of the previous claims, **characterised in that** it is an interferometer type, notably a telescope.

6. A process for reconstructing images in an imaging assembly comprising an aperture synthesis instrument including a plurality of separate pupils (10, 12, 14; 30, 32, 34, 36) with means of detection by scanning, wherein the scanning frequency is selected at a value below the value imposed by the Shannon criterion and so that the neighbouring replicas of the central section of the modulation transfer function overlap this central section so that the non-zero transfer function zones of these replicas are interposed in the zero transfer function zones of the central section of the modulation transfer function, without intersecting a non-zero transfer function zone, and so that in a smaller central section than the central section of the modulation transfer function, and located inside the central section of the modulation transfer function, all of the useful zones are present for reconstructing the modulation transfer function, **characterised in that** the zones of the smaller central section ($40'_{0.0}$; $22_0$) are positioned so that they correspond with the positions of the zones of the central section of the source modulation transfer function in order to re-establish the modulation transfer function from the zones located in the smaller section.

7. The process according to claim 6, **characterised in that** the horizontal or vertical scanning frequency is selected so that in at least one direction, horizontal or vertical, the zones of the neighbouring smaller section are tangential.

**Patentansprüche**

1. Abbildungsbaugruppe, die ein Apertursyntheseinstrument umfasst, das mehrere getrennte Pupillen (10, 12, 14; 30, 32, 34, 36) mit Detektionsmitteln durch Abtasten umfasst, wobei die Werte der Spalten- und Reihenabtastfrequenzen kleiner sind als die Werte, die dem Shannon-Kriterium entsprechen, und derart sind, dass die aus der Abstastung resultierenden Modulationstransferfunktionszonen von Replikaten in Null-Modulationstransferfunktionzonen der mittleren Sektion der Modulationstransferzone so eingefügt werden, dass diese Zonen keinen Schnittpunkt bilden, und so, dass in einer mittleren Sektion, die kleiner ist als die mittlere Sektion der Modulationstransferfunktion, alle Zonen vorhanden sind, die die mittlere Sektion der Modulationstransferzone repräsentieren, wobei die Abbildungsbaugruppe darüber hinaus Mittel zum Umkonfigurieren des Spektrums des erfassten Bildes umfasst, um es zu rekonstruieren, **dadurch gekennzeichnet, dass**:

die Mittel eine Positionierung der Zonen der kleineren mittleren Sektion ($40'_{0.0}$; $22_0$) auf eine solche Weise zulassen, dass sie den Positionen der Zonen der mittleren Sektion der Quell-Modulationstransferfunktion entsprechen, um die Modulationstransferfunktion von den Zonen wieder herzustellen, die sich in der kleineren Sektion befinden.

2. Baugruppe nach Anspruch 1, **dadurch gekennzeichnet, dass** die Werte der Abtastfrequenzen derart sind, dass in wenigstens einer Richtung, Reihe oder Spalte, die Zonen der kleineren mittleren Sektion der Modulationstransferfunktion tangential sind.

3. Baugruppe nach Anspruch 1 oder 2, die drei Pupillen (10, 12, 14) mit einem Durchmesser D' umfasst, deren Mittelpunkte zu einem gleichseitigen Dreieck mit der Seite B' angeordnet sind, so dass: $2D' = \sqrt{3}B'/4$, wobei die Spaltenabtastfrequenz gleich 3B/2 und die Reihenabtastfrequenz gleich 6D

ist, wobei $B=\dfrac{B'}{\lambda}$ und $D=\dfrac{D'}{\lambda'}$ wobei $\lambda$ eine Wellenlänge ist.

**4.** Baugruppe nach Anspruch 2, die vier Pupillen (30, 32, 34, 36) umfasst, von denen jede einen Durchmesser D' aufweist und deren Mittelpunkte zu einem Quadrat mit der Diagonalen B' angeordnet sind, so dass: '2D' = B'/2 ist, wobei die Spalten- und Reihenabtastfrequenzen 6D sind, wobei $D=\dfrac{D'}{\lambda'}$ wobei $\lambda$ eine Wellenlänge ist.

**5.** Baugruppe nach einem der vorherigen Ansprüche, **dadurch gekennzeichnet, dass** sie vom Interferometertyp, insbesondere ein Teleskop, ist.

**6.** Verfahren zum Rekonstruieren von Bildern in einer Abbildungsbaugruppe, die ein Apertursyntheseinstrument mit mehreren getrennten Pupillen (10, 12, 14; 30, 32, 34, 36) mit Detektionsmitteln durch Abtasten umfasst, wobei für die Abtastfrequenz ein Wert gewählt wird, der kleiner ist als der, der durch das Shannon-Kriterium auferlegt wird, und so, dass die Nachbarreplikate der mittleren Sektion der Modulationstransferfunktion diese mittlere Sektion überlappen, so dass die Transferfunktionszonen von ungleich null dieser Replikate zwischen die Null-Transferfunktionszonen der mittleren Sektion der Modulationstransferfunktion gesetzt sind, ohne Schnittpunkt mit einer Transferfunktionszone von ungleich null, und so, dass in einer mittleren Sektion, die kleiner ist als die mittlere Sektion der Modulationstransferfunktion und sich im Innern der mittleren Sektion der Modulationstransferfunktion befindet, alle nützlichen Zonen zum Rekonstruieren der Modulationstransferfunktion vorhanden sind, **dadurch gekennzeichnet, dass** die Zonen der kleineren mittleren Sektion ($40'_{0 \cdot 0}$; $22_0$) so positioniert werden, dass sie den Positionen der Zonen der mittleren Sektion der Quell-Modulationstransferfunktion entsprechen, um die Modulationstransferfunktion von den Zonen wieder herzustellen, die sich in der kleineren mittleren Sektion befinden.

**7.** Verfahren nach Anspruch 6, **dadurch gekennzeichnet, dass** die Reihen- und Spaltenabtastfrequenz so gewählt wird, dass wenigstens in einer Richtung, Reihe oder Spalte, die Zonen der kleineren Nachbarsektionen tangential sind.

FIG.1

FIG.2

FIG.3

FIG.4

**FIG.5a**

**FIG.5b**

**FIG.5c**

**FIG.6**

**FIG.7**

FIG.8

FIG.9

FIG.10a        FIG.10b        FIG.10c

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- *Applied Optics,* vol. 12 (3), 487-492